# EUROPEAN PATENT APPLICATION

(11) **EP 3 617 099 A1**
(43) Date of publication of application: **04.03.2020**
(21) Application number: 18791084.9
(22) Date of filing: 04.04.2018
(51) Int. Cl.: B65G 1/137

(54) **AUTOMATED STORAGE AND RETRIEVAL SYSTEM OF WAREHOUSE CUSTODY FOR MAILS, PACKAGES AND SINGLE-PIECE ITEMS**

(30) Priority: 24.04.2017 US 201762489408 P
(71) Applicant: Suzhou Teddyvine Robotic Technology Co., Ltd, Suzhou, Jiangsu (CN)
(72) Inventor: GUO, Qing, Hangzhou, Zhejiang 310028 (CN); ZHANG, Tong, Bellevue, Washington 98008 (US); GUO, Weiwen, Bellevue, Washington 98008 (US)
(74) Representative: Thoma, Michael
(86) International application number: PCT/CN2018/081852
(87) International publication number: WO 2018/196574

(57) **Abstract**

A automated storage and retrieval system (ASRS) of warehouse custody for mails, packages and single-piece items, comprising a front-end access area, an inter-connectively operated machine, a rear-end storage area, and a control tower; goods shelves being provided in the rear-end storage area, the inter-connectively operated machine comprising a ViVi robot, the front-end access area comprising a smart cabinet, a guiding path which matches an automated guided transport vehicle system being provided between the smart cabinet and the goods shelves. The system is able to achieve an ASRS facility supporting all-weather fully-automated storage and retrieval. In cases of full automation inside, people only needs to perform access operation from the outside, the access realizing logistics exchange so as to complete the steps required in business flow (sales). The system will have an extremely enlarged storage capacity, and have 24x7 service time, improving the terminal service quality and supply chain transit efficiency.

## Description

### Technical Field

The said invention relates to the field of logistics and new retail technology, in particular to an automated warehouse storage system for mail, parcels and single SKUs.

### Background Technique

The capacity of existing post office and commercial mailbox facilities is limited by the number of cabinet units placed on the wall facing the customer. There is usually a lot of extra space in the room behind the wall, and this kind of extra space is served as storage area. In the current configuration, this kind of internal storage area is not directly connected to the front-end facing the client and cannot be directly accessed by external users.

Currently, post offices and commercial mailboxes carry the advantage of becoming pickup location for e-commerce delivery. However, the irregular size of items from e-commerce orders has always been a challenge for post offices and commercial mailboxes, because the size of each user's mailbox is fixed. Customers who rent small mailboxes are restriced from receiving larger orders. Post offices are also installing separate smart lockers as buffer area so that packages, including large orders, can be stored temporatily for customers to access directly. Clearly, the smart lockers are also limited from problems in operation and storage restrictions.

Many traditional brick-n-mortar stores, such as Wal-Mart and Target, it has begun "click-n-pick" to support in-store pickup of online orders. Customers won't have restrictions when pick up orders from local stores as they are separated from the order storage.

However, this kind of operation is still impacted by the inefficiency of manual operations by store staff for order searching and delivering.

New technologies such as mobile apps and secure code entry make it easier to open a smart locker for stored items. Robots can further help establish automated operations, connecting the front smart lockers to the rear shelves for putaway (receival) and pickup (retrieval).

As described here, the new Automated System for retrieval and storage (ASRS) for smaller mail and parcels is designed to separate storage from customer ineraction by automatically connecting very limited customer's access space to comparablely unlimited storage.

### Summary of the invention

The said invention discloses an automated warehouse storage system which can be used for mail, parcels and single SKUs inventory, which can realize an ASRS facility supporting fully automated storage and retrieval all day long (24x7). With total automation inside, people only needs to access and operate from the outside. The human access realizes the exchange in order to complete the total business flow (sales). The said warehouse system will scale quickly for extremely large storage capacity, and have 24x7 service improving the endpoint service level and the whole supply chain efficiency.

In order to achieve the above object, the said invention is realized by the following technical solutions:
An automated warehouse storage system for mail, parcels and single SKUs, comprising: a front end access area, an interconnected operation machine, a back end storage area, and a control tower. The control tower comprising a centralized control system, and a gateway device is disposed on the centralized control system. Shelves are disposed in the back-end storage area, the shelf is provided with a plurality of shelf units, and the shelf unit is provided with a first RFID tag or a first QR code tag or a first location tag; a storage device is disposed in the shelf unit, and the storage device is provided with a second RFID tag or a second QR code tag or a second location tag. The interconnected operation machine includes a ViVi robot. The ViVi robot is provided with an automatic guided vehicle (AGV), an RFID or laser reader/writer, a first communication module adapted for the gateway device, and a arm adapted for the storage devices. The front access area including a smart locker and a buffer area. The buffer area is located between the smart locker and the shelf, the buffer area is used for temporarily storing items, and a central control unit and a human-computer interaction menu are installed on the smart locker. A second communication module adapted for the gateway device, wherein the smart locker is provided with a plurality of smart locker's cabinet units. The front side of a smart locker cabinet unit is provided with a front door, and the rear side of a smart locker cabinet unit is provided with a rear door. A password lock is arranged on the front door, and the rear door is provided with a third RFID tag or a third QR code tag or a third position tag. Guided path is arranged between the smart locker and the shelf so AGV can follow to travel.

The said shelf is an electronic shelf, and the electronic shelf is provided with an electronic shelf label.

The said storage device is a tray (pallet).

The said storage device is bin having an opening at the top, and the front side of the bin is half opened.

The said bottom of the storage devices is provided with sensors.

The said bottom of the storage device is provided with an M-shaped tray plug adapted for the robot arm.

The said ViVi robot can move back and forth, the height of the ViVi robot's arm can be automatically adjusted.

A conveyor belt is provided in said buffer area.

The said smart locker's cabinet unit is provided with an display device of occupancy status.

The said smart locker's cabinet unit is provided with a detection module

Compared with prior arts, the said invention carries the following advantages:
1. The front-end access area of the said invention faces the customer, and the customer accesses the mail, the package, and the like through the smart locker in the front-end access area. A customer opens the front door of a smart locker's cabinet unit to pick up or drop off a package into the smart locker's cabinet unit. The shelves in the back storage area are used to store customer's mail, parcels and the like. The interconnected operational machine is used to transfer the mail, the package and the like between the smart locker in the front access area and the shelf in the back storage area. The buffer area is used to temporarily store the customer's items to realize batch process. The control tower can also schedule pickup per customer's appointment, pre-pick and store the customer's packages in the buffer area near the front end or directly below the smart locker. The package can then be ready for pickup upon the comster's arrival, reducing customer's waiting. The ViVi robot will pick up packages customers have dropped off into the smart locker, transfer and store the packages onto the shelf in the back-end storage area. The ViVi robot can also pick up packages from the shelf, transfer and drop off the packages into smart locker for customers to pick up. The control tower builds LAN through the gateway device, ensures the accuracy of the operations against packages through location technology such as RFID. The control tower, the front-end access area, the back-end storage area and the interconnected operation machine form an ASRS facility all day long (24x7). With total automation inside, people only needs to access and operate from the outside. The human access realizes the exchange in order to complete the total business flow (sales). The said warehouse system will scale quickly for extremely large storage capacity, and have 24x7 service improving the endpoint service level and the whole supply chain efficiency. Even a semi-automatic picking solution can also save labor and improve efficiency for retail and logistics.
2. The shelf of the said invention is an electronic shelf, and an electronic label is arranged on the shelf, which enables automatic locating address.
3. The storage device of the said invention is a tray (pallet) that can be used to store large items.
4. The storage device of the said invention is a bin with full opening on the top and half openning on the front. The bin is used for storing small items. Its half-opened front makes it easier to drop off or pick up from the bin while the front side can also hold and prevent mails or parcels from slipping out.
5. The bottom of the storage device of the said invention is provided with a sensor capable of sensing the weight and position of the storage device. The sensor can collect the movement coordinates of the storage devices and forward the position information to the control tower. Based on the information from the sensor, the control tower can notify customers when their packages are stored.
6. The bottom of the storage device of the said invention is an M-shaped tray socket adapted for the robot's arm, which enables the robot to firmly secure the storage device onto the robot's form arm when move.
7. The ViVi robot of the said invention can move back and forth, the height of the robot's arm can be automatically adjusted. The position of the ViVi robot and the height of the robot's arm can be adjusted as needed, so that the robot's arm can move in three dimensions and accurately access the wanted items on the smart locker or the shelf.
8. The conveyor belt is provided in the buffer area of the said invention, which can quickly handle batch receiving and delivering in large quantity.
9. The smart locker of the said invention is equipped with an occupancy status display device capable of displaying whether each of the smart locker unit is occupied.
10. The smart locker's unit of the said invention is equipped with a detection module, which can detect information and mechanical movements and enable automatic receiving for each of the cabinet unit.

### Drawings

- Figure 1: is a bird's eye view of the said invention;
- Figure 2: is a flow chart of automatic picking a package by a customer;
- Figure 3: is a flow chart of the automatic storing a package by a courier or customer;
- Figure 4: is a front view of the smart locker;
- Figure 5: is a rear view of the smart locker;
- Figure 6: is a front view of the shelf;
- Figure 7: is an operational view of a ViVi robot;
- Figure 8: is one structure implmentation of the ViVi robot.

### Operations

The said invention is further illustrated below in conjunction with specific embodiments. It is to be understood that the examples are not intended to limit the scope of The said invention. In addition, it should be understood that various changes and modifications may be made by the skilled in the art in the form of the said invention.

The said invention is about an automated access warehouse storage system for mail, parcels and single SKUs, comprising a front-end access area, an interconnected operation machine, a back-end storage area, a control tower. The control tower comprises a centralized control system, on which a gateway device is disposed. Shelves are disposed in the back-end storage area, and the shelf is provided with a plurality of shelf units, and a shelf unit is provided with a first RFID tag or a first QR QR code label Or a first location tag. A shelf unit is used to hold a storage device, and the storage device is provided with a second RFID tag or a second QR code tag or a second location tag. The interconnection operation machine comprises a ViVi robot, which is consisted of an automatic guided vehicle (AGV), an RFID or laser reader/writer, a first communication module adapted for the gateway device, and a arm adapted for the storage device. The front access area including a smart locker and a buffer area, which is located between the smart locker and the shelf. The buffer area is used for temporarily storing packages. The smart locker is equipped with a central control unit to process/control, a touch screeen for human interace, and a second communication module adapted for the gateway device. The smart locker comprises a plurality of cabinet units. The front side of the smart locker's cabinet unit is equipped a door - front door, and the rear side of the smart locker's cabinet unit may be equipped with a door - rear door. A password lock is arranged on the front door, and the rear door is equipped with a third RFID tag or a third QR code tag or a third position tag. There are guiding path for the ViVi robot (AGV) between the smart locker and the shelf. The front-end access area faces the customer and the customer accesses the mail, the parcel and other items through the smart locker of the front-end access area; the customer opens the front door of the smart locker's cabinet unit to pick up or drop off a package. The shelf in the back-end storage area is used to store the customer's mail, parcels and the like. The interconnected operation machine is used to transfer the mail, the package and the like between the smart locker in the front access area and the shelf in the back storage area. Opening the back door of the smart locker's cabinet unit, the ViVi robot can pick up the package dropped by a customer or drop off a package into the unit for a customer to pick up later. The control tower builds a local area network through gateway device, and ensures accurate access to mail, parcels and other items through RFID technology. The control tower, front-end access area, back-end storage area, and interconnected operation machine form an ASRS facility, which is fully automated internally, all day long (24x7). With the total automation insdie, the customer only needs to access it from the outside at a flexible schedule and the number of packages that can be stored and fulfilled is no longer retstricted by the limited available cabinet units.

In order to achieve automatic locating a shelf, the shelf is an electronic shelf, and an electronic label is provided on the location of the electronic shelf to enable automatic locating address.

In order to store large items, the storage device can be a tray (pallet) that can be used to store large items.

In order to store smalle items, the storage device can be a bin with opening on the top, the front side of the access box is half opened. The bin is used for storing small items, which can be put down easily into an enclosed space while being kept from slipping out.

For monitoring in real-time the position of items in the said warehouse system, the bottom of the storage device is equipped with a sensor capable of sensing the weight and position coordinates of the storage device. The sensors can be used to collect the position of the storage device, and forward the movement information to the control tower. The control tower can also notify the customer when the package is placed (with the weight information).

In order for the storage device to be securely transferred, its bottom is shapped into M-shape adapted for the robot's arm, which enables the robot to firmly hold the storage device for its stability.

For the ViVi robot to accurately access the corresponding items on the smart locker or on the shelf, the said ViVi robot can move back and forth, the height of the ViVi robot's arm can be automatically adjusted, and the position and the height of the ViVi robot's arm can all be adjusted together as needed so to enable the robot to move in three dimensions, ensuring the ViVi robot to accurately access the corresponding items in the smart locker or on the shelf.

In order to efficiently achieve receiving and shipping in batch, a conveyor belt is provided in the buffer area to enable receiving and fulfilling packages in large quantity.

In order to display whether the smart locker's cabinet unit is occupied, the smart locker's cabinet unit is equipped with an occupancy status display device to indicate whether the smart locker's cabinet unit is occupied.

In order to ensure automatic receiving to the smart locker's cabinet unit, the smart locker's cabinet unit is equipped with a detection module, which can detect information and mechanical movements, and can ensure automatic receiving to the smart locker's cabinet unit.

### Embodiments

An automated warehouse storage system for mail, parcels, and single SKUs, including front-end access areas, interconnected operating machines, back-end storage area, and control tower. A buffer area is installed between the front-end access area and the back-end storage area, and the buffer area is used for temporarily storing the packages. The control tower can also schedule pickup per customer's appointment, pre-pick and store the customer's packages in the buffer area near the front end or directly below the smart locker. The package can then be ready for pickup upon the comster's arrival, reducing customer's waiting.

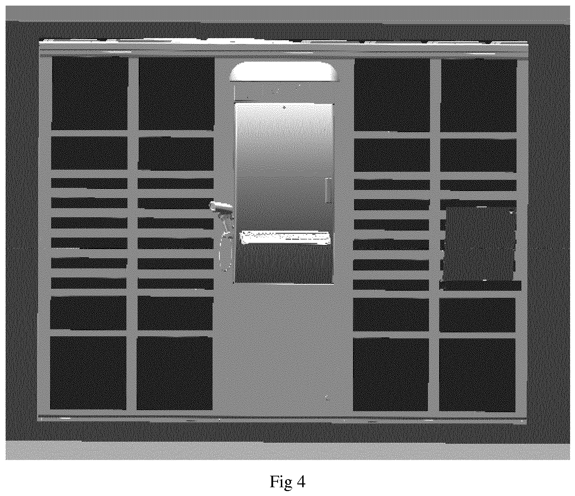

The front end access area includes a smart locker for access. As shown in FIG. 4, the center of the front side of the smart locker is equipped with a central control unit, which includes an interaction interface, and the central control unit is connected with a second communication module adapted for the gateway device (for LAN networking). There are several cabinet units in the smart locker. Smart locker's cabinet units can be different in size. The smart locker's cabinet unit can be assigned with a QR code and the customer can obtain information about the smart locker's cabinet unit by scanning the QR code. Customer's request will be forwarded to the control tower. The front side of the smart locker's cabinet unit is installed a door - front door, and the front door is equipped with a password lock and a display device for occupancy status. The password lock and the occupancy status display device are all connected to the central control unit, and can be directly or online input password to unlocked the door. The occupancy status display device can be an indicator light or a display screen, and the indicator light's on/off or the display screen can indicate whether the smart locker's cabinet unit is occupied. The rear side of the smart locker's cabinet unit can be equipped with a door - rear door, and the rear door is provided with a third RFID tag or a third QR code label or a third position label. Through the third RFID tag, the smart locker sets the ID address of the unit, which is accessed by the interconnected operation machine. The size of the smart locker's cabinet unit is equivalent to the size of the rack unit in the back end storage area, and the storage device storing the customer's package is moved between the smart locker's cabinet unit and the shelf unit.

A second RFID tag or a second QR code tag or a second location tag is embedded in the storage device, and the storage device is configured to store items such as mails, packages, and the like. The bottom of the storage device is equipped with a sensor for collecting the position coordinates of the movement of the storage device and forwarding the position information thereof to the control tower, so the control tower can also notify the customer when the package is placed. For large items, the storage device is a tray (pallet) made of plastic, and the rear storage area is provided with a shelf adapted for the tray. For small items, the storage device is a bin with opening on the top. The back end storage area is provided with a shelf that is compatible with the bins. The front side of the bin is half opened, and the bottom of the bin is in M-shaped adapted for the robot's arm. The bin is used for storing small items. Its half-opened front makes it easier to drop off or pick up from the bin while the front side can also hold and prevent mails or parcels from slipping out. The M-shaped from the tray (pallet) or the bin's bottom facilitates ViVi robot to pick.

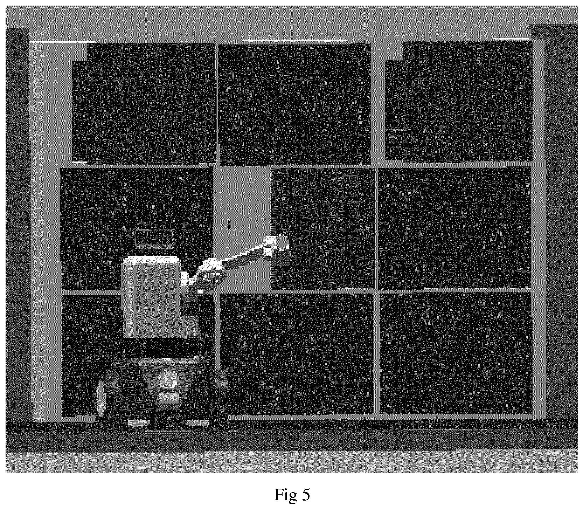

The interconnected operation machine comprises one or more ViVi robots, and the ViVi robot is provided with an automatic guided vehicle (AGV), an RFID reader, and a first communication module adapted for the gateway device, and the top of the ViVi robot is a plate for holding one or more storage devices. As shown in Fig. 5, a ViVi robot is opening a rear door of a smart locker's cabinet unit and ready to drop off a storage device while the storage device is still on the support plate at the top of the ViVi robot. The ViVi robot is provided with a arm adapted for the storage device, and the robot can pick up the storage device from the shelf or the smart locker, and follow the guiding path defined on the ground to transfer the picked storage device to the destination, which is either storage shelves in the back-end or smart lockers ready to be picked up by customers in the front-end. The ViVi robot has wheels that can support at least the forward, backward, left and right movements. It can also be rotated to move back and forth and left and right. The ViVi robot's arm can reach various heights and load packages of various sizes and weights.

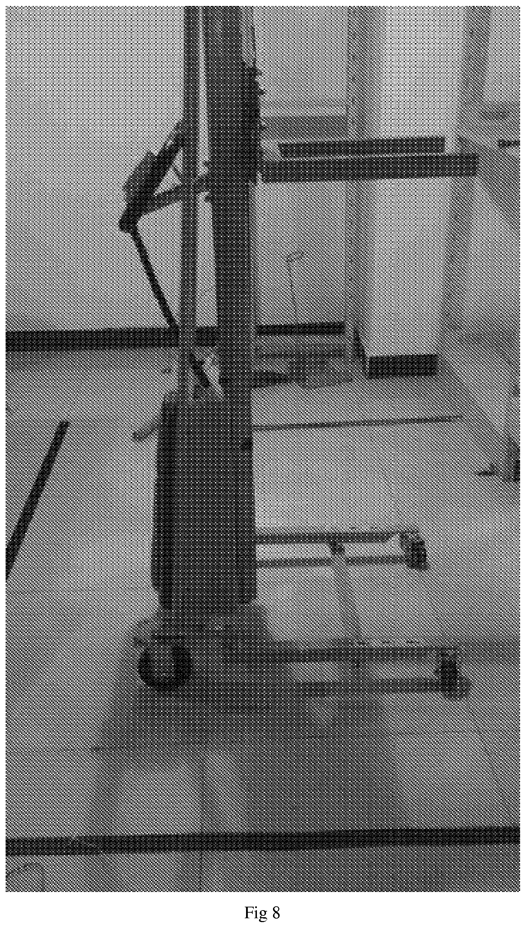

The ViVi robot's arm can use the lifting fork structure as shown in Fig. 8, and the fork moves vertically in Y-axis to realize the pick-up and drop-off. The ViVi robot can communicate with the control tower and identify through RFID the location of the package (on a tray or in a bin) on the shelf or in the smart locker. ViVi robots can be configured to support automated storage and retrieval system (ASRS), loading one storage device per trip between a smart locker and a shelf, or optimized to load multiple storage devices per one trip among multiple smart lockers and multiple shelves. By mapping the storage device to the address of the unit on the shelf or in the smart locker, ViVi robots can move storage devices from anywhere (eg, manual sorting stations) to storage shelves or to smart lockers for picking.

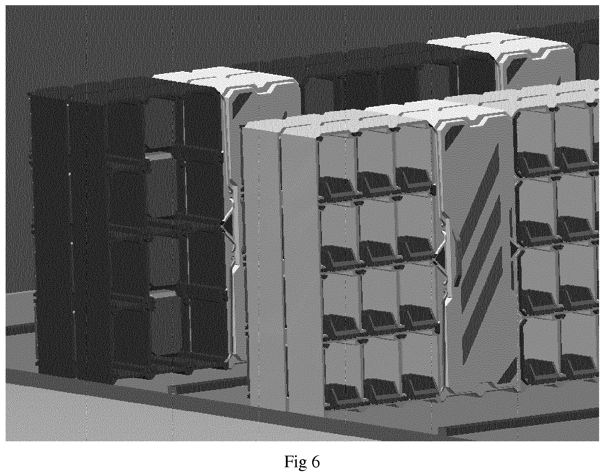

Shelves are disposed in the back end storage area. As shown in FIG. 6, the shelf is provided with a plurality of shelf units, and the shelf unit is equipped with a first RFID tag, a first RFID tag or a first QR. Each shelf unit is identified by a RFID tag, so that the ViVi robot can find the target. A storage device is disposed in one shelf unit, and the back storage area can be configured as one or more areas according to different storage plans; and each area is two bidirectional shelves connected together, so each shelf can be accessed by one side, the typical warehouse setup.

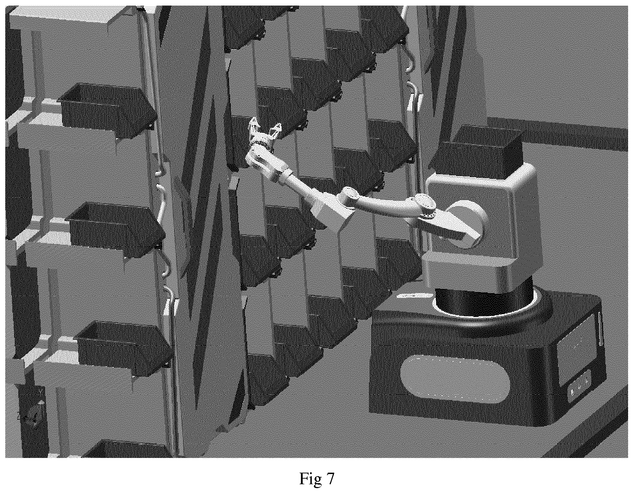

As shown in FIG. 7, the ViVi robot picks up a storage device from a unit on the shelf, and the storage device is placed on a plate on top of the ViVi robot. A guiding path is provided between the smart locker and the shelf, which is adapted for the AGV.

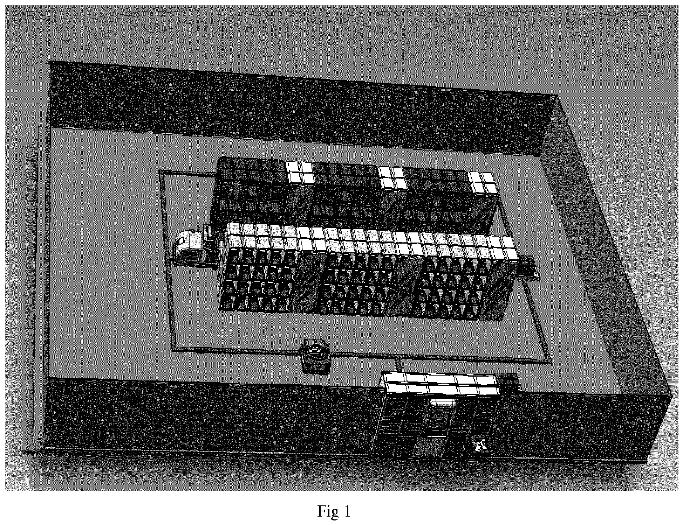

The implementation, as shown in FIG. 1, is a room or a building with a door in the front and enclosed by walls around. The front door is equipped with a smart locker for customers to access. The inside is the back-end storage with two areas, one of which is shelves loaded with small bins and the other is shelves loaded with large-sized items, and several ViVi robots move along the guiding path on the bottom surface to run among shelves and smart lockers. The Control Tower is a centralized control system that sends and receives information from customers, smart lockers, ViVi robots, shelves and storage devices. Through certain access software (such as websites or apps), the control tower can send various components of the system to display and to receive input from customers for accessing their mails or packages. It creates a LAN with a gateway device that manages dynamic routing to connect the front-end access area to the back-end storage area, creates routes and triggers ViVi robot to position and move the required packages to the front-end access area for customers to pick up. The arrival signal of any storage device can be collected to inform the package's owner of the arrival of a new package. The control tower can also schedule to pick up the mail or parcel in advance according to the customer's appointment and store it in the buffer area so that the customer can pick it up quickly upon his/her arrival. The front-end access area is for customers, who access mails, packages and the like through the smart locker in the front-end access area, and the customer opens the front door of the smart locker's cabinet unit to pick up or drop off. The shelves in the back-end storage area are used to store customer's mails, parcels, etc. The ViVi robot can pick up the items customers drop off in the smart locker's cabinet unit or drop off the items required by the customer into the smart locker's cabinet unit. The control tower builds a local area network through gateway equipment, and ensures accurate access of the locations for stored mails, parcels and other items through RFID technology. The control tower, front-end access area, back-end storage area, and interconnected operation machine form an ASRS facility, which is fully automated internally, all day long (24x7). In this case, the customer only needs to access from the outside, and can come to the automated facility on scheduled appointments. The number of packages in/out to be stored is no longer limited by the available cabinet unit.

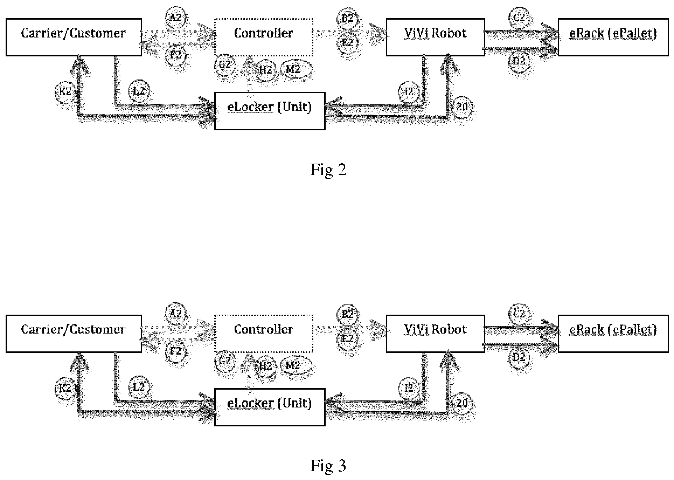

When the customer picks up the item, the system can perform automatic retrieval. The ViVi robot will take instructions from the control tower and go to the address of the specified storage device. Its movement is guided by the guiding path on the ground leading to the positions of the back of the smart locker or of the shelf. At the shelf, the ViVi robot will move the robot's arm back and forth and up and down as needed to move the storage device between the support plate and the shelf or the smart locker. After the customer picks up the storage device from the smart locker, the robot will empty the unit to make it available by removing the storage device. The storage device is retrieved from the smart locker back to the original location on the shelf. The specific steps are shown in Figure 2, dotted lines represent information flows; solid lines represent physical touches, A1: A customer to send request to the controller through web/app with mailbox id or package number; L1: The customer to key-in request on the locker or scan QR code of a unit of the locker; G1: The locker to notify the controller with the request for mail retrieval from this unit; B1: The controller to trigger a ViVi robot; C1: The ViVi robot to move to the rack with the storage device of the customer's mailbox; D1: The ViVi robot to load the storage device onto itself; 11: The ViVi robot to move to the locker and open the back door of the requested unit; J1: The ViVi robot to unload the storage device into the locker unit and secures the back door; E1: The ViVi robot to notify the controller for completion of mail delivery; H1: The controller to unlock the locker unit; F1: The controller to notify the customer ready to pickup mails from the requested/assigned locker unit; K1: The customer to open the front door of the locker unit for mails inside.

The system can also implement inventory and pick-up, the system can perform automatic storage for receiving and storing parcels, mail and classified parcels can still be manually received and loaded and added in the storage on the shelf. The specific steps are shown in Figure 3. Dotted lines represent information flows; solid lines represent physical touches. A2: A carrier to send request to the control tower through web/app with a request for dropping off a package; L2: The carrier to key-in request on the smart locker or scan QR code of a unit of the locker; G2: The smart locker to notify the controller with the request for a package to be dropped into this unit; B2: The controller to trigger a ViVi robot with an empty storage device (tray) id; C2: The ViVi robot to move to the shelf and load the assigned storage device onto itself; 12: The ViVi robot to move to the smart locker, open the back door of the requested unit, unload the empty storage device into the unit, then secure the back door; H2: The smart locker to notify the controller for the storage device to be ready in the requested/assigned locker unit and then unlock the front door of the unit; F2 - The controller to notify the carrier ready to drop off into the requested/assigned locker unit; K2: The carrier to drop the package into the storage device in the locker unit and secure the front door of the unit; M2: The locker to notify the controller ready to receive the package; E2: The controller to notify a ViVi robot to receive the storage device; J2: The ViVi robot to open the back door of the locker unit, load the storage device onto itself from the locker unit; D2: The ViVi robot to move to the rack and unload the storage device to its location on the shelf rack.

When the customers come to the smart locker for pick up a package, they enter the ID and associated password on the keyboard of the human-computer interaction interface of the control unit, then the control tower will verify the input and wait for the mail or package to be picked up from the storage area and sent to the smart locker's cabinet unit before unlock the smart locker's cabinet unit for the customer to pick up the mail or package in the storage device. After the customer finishes or goes overtime, the front door will be closed. A similar process is also used for dropping off a package. When the customer makes an appointment, the customer can make an appointment in advance through the application or website. The control tower will sort the mail or package according to the requirements of each customer, and store the mail/package in the buffer area near the front area. When the customer arrives requesting pickup, the ViVi robot will pick up the from the buffer area, much faster than from the storage area in the back-end. After a package has been picked up from the smart locker, the storage device that was holding the package will be empty and be picked up by the ViVi robot to return to the original location on the shelf in the back-end.

This hidden fulfillment method can also be used for couriers by schedule to drop off packages into the smart locker. Before the courier arrives, the system can make the smart locker's cabinet unit prepare for allocated storage devices for faster response. The control tower can send a notification to the customer via the application or email when the mail or package are ready. The sensor at the bottom of the storage device will collect the activity of the storage device and forward the update to the control tower for notification. The control tower can notify the customer when the package is placed. The said invention can implement an ASRS for small items, such as letters and parcels, which can eliminate space constraints from typical front-end access configurations and provide flexible access to packages of different sizes. It can also provide better service to customers and couriers with status notifications and appointment schedule. Implementations can apply to, but are not limited to, post offices, commercial mailboxes, by significantly increasing the capacity they can provide and get rid of the limitations from the typical front-end cabinets accessed by customers.

The system can also be used to pick large packages that cannot be stored in smaller mailboxes. For E-commerce's pickup, the system can realize an ASRS facility all day long (24x7); with the total automation inside, customers and couriers only need to access or operate from outside by their own flexible schedule; capacity improvements for post offices and commercial mailboxes are also realized as the number of packages that can be removed and stored is no longer limited by the available cabinet units. For in-store pickup for online orders, automated operations can help increase efficiency and reduce or even eliminate manual operations; warehouse and fulfillment are operated by automatic retrieval and storage under the constraints of size and weight; For commercial smart lockers for personal-to-personal (P2P) exchange, very similar to e-commerce smart lockers, everything can be done at the end-customer except retrieval and storage. The said system will increase capacity and storing time with online / mobile notifications and virtual/electronic locking mechanisms.

## Claims

1. An automated warehouse storage system for mail, parcels and single SKUs, comprising:
a front-end access area,
an interconnected operation machine,
a back-end storage area,
a control tower.
wherein:
the control tower comprises a centralized control system, and a gateway device (for LAN) is disposed on the centralized control system;
the back-end storage area comprises shelves, the shelves containing a plurality of shelf units, and the shelf units being provided with a first RFID tag or a first QR code tag or a first location tag, a storage device being disposed in the shelf units, and the storage device being provided with a second RFID tag or a second QR code tag or a second location tag;
the interconnected operation machine comprises ViVi robots, the ViVi robot comprising an automatic guided vehicle (AGV), an RFID or laser reader/writer, a first communication module adapted for communicating with the gateway device, and a arm adapted for working with the storage devices;
the front access area comprising a smart locker and a buffer area, the buffer area being located between the smart locker and the shelves, the buffer area being usable for temporarily storing items, and a central control unit and a human-computer interaction module being installed on the smart locker;
a second communication module is adapted for communicating with the gateway device, and the smart locker containing a plurality of smart locker's cabinet units, the front side of a smart locker cabinet unit being provided with a front door, and the rear side of a smart locker cabinet unit preferably being provided with a rear door, a password lock preferably being arranged on the front door, and the rear side being provided with a third RFID tag or a third QR code tag or a third position tag; and
a guided path being arranged between the smart locker and the shelves so AGV can follow to travel.

2. The automated access warehouse storage system for mail, parcels and single SKUs according to claim 1, wherein the shelf is an electronic shelf, and the electronic shelf is provided with an electronic shelf label.

3. The automated access warehouse storage system for mail, parcels and single SKUs according to claim 1 wherein said storage device is a tray (pallet).

4. The automated access warehouse storage system for mail, parcels and single-piece articles according to claim 1, wherein said storage device is bin having an opening at the top, and the front side of the bin is half opened.

5. The automated access warehouse storage system for mail, parcels and single SKUs according to claim 1 wherein the bottom of the storage devices is provided with sensors.

6. The automated access warehouse storage system for mail, parcel and single SKU according to claim 1, wherein the bottom of the storage device is provided with an M-shaped tray plug adapted for the robot arm.

7. The automated access warehouse storage system for mail, parcel and single SKU according to claim 1, wherein the ViVi robot can move back and forth, the height of the ViVi robot's arm can be automatically adjusted.

8. The automated access warehouse storage system for mail, parcels and single SKUs according to claim 1, wherein a conveyor belt is provided in said buffer area.

9. The automated access warehouse storage system for mail, parcels and single-piece articles according to claim 1, wherein the smart locker's cabinet unit is provided with an display device of occupancy status.

10. The automated access warehouse storage system for mail, parcels and single SKUs according to claim 1, wherein the smart locker's cabinet unit is provided with a detection module.
